# EUROPÄISCHE PATENTSCHRIFT

(11) **EP 3 135 440 B1**
(45) Veröffentlichungstag und Bekanntmachung des Hinweises auf die Patenterteilung: **12.06.2019**
(21) Anmeldenummer: 16185071.4
(22) Anmeldetag: 22.08.2016
(51) Int. Cl.: B25H 5/00

(54) **TRANSPORTSYSTEM FÜR KRAFTFAHRZEUGMOTOREN**
TRANSPORT SYSTEM FOR MOTOR VEHICLE ENGINES
SYSTÈME DE TRANSPORT POUR DES MOTEURS DE VÉHICULE AUTOMOBILE

(30) Priorität: 24.08.2015 DE 102015114031
(43) Veröffentlichungstag der Anmeldung: 01.03.2017
(73) Patentinhaber: TKR Spezialwerkzeuge GmbH, 58285 Gevelsberg (DE)
(72) Erfinder: RACHHOLZ, Ralf, 85464 FINSING (DE); YILDIRIM, Fatih, 81735 München (DE)
(74) Vertreter: Kalkoff & Partner

(56) Entgegenhaltungen:
- DE-A1- 3 005 310
- DE-A1-102005 030 734
- DE-A1-102010 005 829
- DE-C1- 4 013 228
- US-A- 4 588 165
- US-A- 5 934 490
- US-A1- 2014 259 663

## Beschreibung

Die Erfindung betrifft ein Transportsystem für Kraftfahrzeugmotoren, mit
- einer an einem Kraftfahrzeugmotor anordbaren Motoreneinheit und
- einer an einem Lastenträger anordbaren Lastaufnahmeeinheit.

Ein im Rahmen von Reparaturarbeiten in Kraftfahrzeugwerkstätten erforderlicher Austausch eines Kraftfahrzeugmotors macht es erforderlich, für den Werkstattbetrieb hierzu geeignete Vorrichtungen vorzusehen, welche eine lagesichere Anordnung des Kraftfahrzeugmotors an bspw. einem als Montagebock ausgebildeten Lastenträger ermöglichen. Der Montagebock ist dabei in der Regel verfahrbar und ermöglicht so die Verlagerung und Positionierung eines auszutauschenden bzw. ausgetauschten Motors.

Aufgrund des hohen Eigengewichts von Kraftfahrzeugmotoren ist es dabei von hoher Wichtigkeit, dass eine zuverlässige Anordnung des Kraftfahrzeugmotors an einem mit einem bspw. Montagebock verbindbaren Transportsystem gewährleistet ist. Zudem muss das Transportsystem in der Regel dazu ausgelegt sein, auch bei Verschwenkbewegungen des Montagebocks, in deren Rahmen der Motor um eine Längsachse verdreht wird, eine sichere Anordnung zu gewährleisten.

Bekannte Transportsysteme der eingangs genannten Art sehen in der Regel die Anordnung von großen Motoreneinheiten an dem Kraftfahrzeugmotor vor, welche ein hohes Eigengewicht besitzen. Zudem ist für jeden unterschiedlichen Motor eine entsprechende Motoreneinheit erforderlich. Darüber hinaus weisen die bekannten Transportsysteme in der Regel keine Möglichkeit auf, die Motoren zu verschwenken, da in der Regel dann die Positionssicherheit des Kraftfahrzeugmotors an dem Transportsystem bzw. an dem das Transportsystem aufweisenden Lastenträger nicht gewährleistet ist.

Ein Transportsystem für Kraftfahrzeugmotoren ist aus DE 30 05 310 A1 bekannt.

Der Erfindung liegt die Aufgabe zugrunde, ein Transportsystem bereitzustellen, das eine zuverlässige Lagesicherung eines mit dem Transportsystem verbundenen Kraftfahrzeugmotors gewährleistet.

Die Erfindung löst die Aufgabe durch ein Transportsystem mit den Merkmalen des Anspruchs 1. Vorteilhafte Weiterbildungen der Erfindung sind in den abhängigen Ansprüchen angegeben.

Kennzeichnend für das erfindungsgemäße Transportsystem ist, dass an der Lastaufnahmeeinheit - die im Werkstattbetrieb bspw. an einem verfahrbaren Montagebock oder dergleichen anordbar ist - eine zwischen einer Verriegelungsposition und einer Freigabeposition verstellbare Verriegelungseinheit angeordnet ist. Die Verriegelungseinheit ist dabei erfindungsgemäß derart ausgebildet, dass die an einem Kraftfahrzeugmotor anordbare Motoreneinheit in einer Transportposition an der Lastaufnahmeeinheit selbsttätig verriegelt.

Bei der Transportposition handelt es sich dabei um die Position der Motoreneinheit relativ gegenüber der Lastaufnahmeeinheit, in der der Kraftfahrzeugmotor über die Motoreneinheit lagesicher an der Lastaufnahmeeinheit angeordnet ist und dann gefahrlos mit dem Transportsystem verlagert, und ggfs. auch verschwenkt werden kann, so dass er in die jeweils gewünschte Position verstellbar ist. In der Transportposition ist der Kraftfahrzeugmotor somit ohne weitere Hilfsmittel allein über die Lastaufnahmeeinheit festgelegt. Eine zuverlässige Lagesicherung ist dabei insbesondere vor dem Hintergrund des erheblichen Gewichts der Kraftfahrzeugmotoren von grundsätzlicher Bedeutung, da ein herabstürzender Motor im Werkstattbetrieb zu erheblichen Verletzungen bei umstehenden Mitarbeitern führen kann.

Die Verwendung einer Verriegelungseinheit, die in der Freigabeposition eine Entnahme der Motoreneinheit von der Lastaufnahmeeinheit ermöglicht und welche selbsttätig in die Verriegelungsposition gelangt, gewährleistet in besonderem Maße, dass ein unter Verwendung des Transportsystems angeordneter Motor zuverlässig in der Transportposition verbleibt. Eine ergänzende Lagesicherung der Motoreneinheit an der Lastaufnahmeeinheit und/oder eine Sperrung der Verriegelungseinheit ist gemäß der Erfindung nicht erforderlich. Unter Verwendung des Transportsystems können somit beliebige Lastenträger zur zuverlässigen Verlagerung von Kraftfahrzeugmotoren eingesetzt werden, sofern die Lastenträger, wie z. B. Lagerböcke zur Aufnahme der durch die Kraftfahrzeugmotoren aufgebrachten Lasten ausgelegt sind.

Die Ausgestaltung der Motoreneinheit und der Lastaufnahmeeinheit derart, dass in der Transportposition von der Motoreneinheit zuverlässig alle auftretenden Kräfte auf die Lastaufnahmeeinheit übertragen werden, ist grundsätzlich frei wählbar. Nach einer vorteilhaften Ausgestaltung der Erfindung ist jedoch vorgesehen, dass die Lastaufnahmeeinheit einen Aufnahmekörper und die Motoreneinheit eine derart an den Aufnahmekörper angepasste Aufnahmeöffnung aufweist, dass die Motoreneinheit in der Transportposition im Wesentlichen senkrecht zur Längsachse des Aufnahmekörpers an der Lastaufnahmeeinheit festgelegt ist.

Gemäß dieser Ausgestaltung der Erfindung ist an der Lastaufnahmeeinheit ein Aufnahmekörper, bspw. ein Aufnahmedorn vorgesehen, welcher in der Transportposition in eine Aufnahmeöffnung an der Motoreneinheit eingreift. In der Transportposition wirken dabei die Aufnahmeöffnung und der Aufnahmekörper derart zusammen, dass eine senkrecht zum Aufnahmekörper, bspw. einem Aufnahmedorn gerichtete Verlagerung der Motoreinheit weitestgehend blockiert ist. Eine entsprechende Ausgestaltung der Lastaufnahmeeinheit und der Motoreinheit gewährleistet in einfacher Weise eine entsprechende Lagesicherung eines an der Motoreinheit anordbaren Kraftfahrzeugmotors relativ zu dem mit der Lastaufnahmeeinheit verbundenen Lastenträger. Ferner gewährleistet diese Ausgestaltung der Erfindung zudem bei einer in der Transportposition besonders vorteilhafterweise vorgesehenen Auflage der Motoreinheit mit einer Stirnfläche an einer Anschlagfläche der Lastaufnahmeeinheit, dass eine entsprechend in Längsachsenrichtung des Aufnahmekörpers in Richtung auf die Lastaufnahmeeinheit gerichtete Bewegung der Motoreneinheit in einfacher Weise blockiert ist. Auf zusätzliche Sicherungsmaßnahmen zur entsprechenden Lagesicherung kann gemäß dieser Ausgestaltung der Erfindung verzichtet werden.

Die Ausgestaltung des Aufnahmekörpers sowie die entsprechende Ausgestaltung des Aufnahmeabschnitts kann grundsätzlich in beliebiger Weise erfolgen. Nach einer besonders vorteilhaften Ausgestaltung der Erfindung ist jedoch vorgesehen, dass die Aufnahmeöffnung und der Aufnahmekörper zwei in Längsachsenrichtung des Aufnahmekörpers im Abstand voneinander angeordnete, korrespondierend ausgebildete Zylinderabschnitte aufweist. Die Verwendung von zwei definierten Zylinderabschnitten ermöglicht es, die zur Lagesicherung vorgesehen Flächen in einfacher Weise auszugestalten. Über die Zylinderflächen wird dabei in besonders zuverlässiger Weise eine Verlagerungssicherung senkrecht zur Längsachse des Aufnahmekörpers erzielt. Die übrigen Bereiche des Aufnahmekörpers können dabei mit geringerer Toleranz ausgeführt werden, da diese nicht zur Lastübertragung beitragen müssen.

Nach einer besonders vorteilhaften Ausgestaltung der Erfindung ist dabei vorgesehen, dass die Zylinderabschnitte über einen konischen Verbindungsabschnitt miteinander verbunden sind, wobei der der Motoreneinheit zugewandte Zylinderabschnitt einen kleineren Durchmesser aufweist, als der der Motoreneinheit abgewandte Zylinderabschnitt. Gemäß dieser Ausgestaltung der Erfindung weist der Aufnahmekörper einen konischen, sich in Richtung auf die Motoreneinheit verjüngenden Verlauf auf, wobei die im Abstand voneinander angeordneten Zylinderabschnitte einen unterschiedlichen Durchmesser besitzen. Der konische Verlauf ermöglicht es dabei in ergänzender Weise, eine besonders einfache und zuverlässige Anordnung der Motoreneinheit an der Aufnahmeeinheit zu erreichen. Der entsprechend dem Aufnahmekörper ausgebildete konische Verlauf der Aufnahmeöffnung dient dabei zudem als Einführ- und Zentrierhilfe.

Nach einer weiteren Ausgestaltung der Erfindung ist ferner vorgesehen, dass die Lastaufnahmeeinheit und die Motoreneinheit in der Transportposition über eine Verdrehsicherung aneinander festgelegt sind. Eine entsprechend ausgestaltete Verdrehsicherung gewährleistet, dass die Motoreneinheit und insbesondere ein mit der Motoreneinheit verbundener Kraftfahrzeugmotor im Falle einer Neigung des Kraftfahrzeugmotors an dem Lastenträger nicht gegenüber der Lastaufnahmeeinheit verdreht wird. Die Verdrehsicherung ermöglicht somit eine exakte und genaue Positionierung des mit der Motoreneinheit verbundenen Kraftfahrzeugmotors, so dass ein einfacher Austausch, d. h. Ein- und Ausbau von Kraftfahrzeugmotoren im Werkstattbetrieb erfolgen kann. Die Ausgestaltung der Verdrehsicherung kann dabei in beliebiger Weise erfolgen, bspw. durch von dem Aufnahmekörper vorstehende Zapfen und/oder Bolzen, welche in der Transportposition in entsprechende Ausnehmungen an der Motoreinheit eingreifen.

Die erfindungsgemäß vorgesehene Verriegelungseinheit gewährleistet aufgrund ihrer Selbsttätigkeit, dass eine in der Transportposition angeordnete Motoreneinheit selbsttätig an der Lastaufnahmeeinheit festgelegt ist. Auf ergänzende Sicherungsmittel zur Lagesicherung der Transportposition kann somit verzichtet werden, wodurch Fehlbedienungen im Werkstattbetrieb die zu Unfällen führen können, sofern ergänzende Sicherungsmaßnahmen erforderlich sind, ausgeschlossen werden können.

Die Ausgestaltung der Verriegelungseinheit ist dabei grundsätzlich frei wählbar. Nach einer besonders vorteilhaften Ausgestaltung der Erfindung ist vorgesehen, dass die Verriegelungseinheit ein Verriegelungselement, vorzugsweise zwei in Richtung auf die Verriegelungsposition vorgespannte, insbesondere federvorgespannte Verriegelungselemente aufweist.

Die Verwendung von einem oder mehreren Verriegelungselementen, welche in Richtung auf die Verriegelungsposition vorgespannt sind, gewährleistet in hohem Maße eine selbsttätige Verriegelung der Transportposition. Insbesondere eine Federvorspannung zeichnet sich dabei dadurch aus, dass sie zum einen eine Verlagerung aus der Verriegelungsposition in die Freigabeposition bei der Anordnung der Motoreneinheit an der Lastaufnahmeeinheit zulässt, dass jedoch gleichzeitig bei Erreichen der Transportposition die Verriegelungseinheit selbsttätig zuverlässig in die Verriegelungsposition gelangt. Eine Federvorspannung zeichnet sich dabei auch durch ihre besondere Einfachheit und Zuverlässigkeit sowie geringen Herstellungskosten aus.

Grundsätzlich genügt die erfindungsgemäße selbsttätige Verriegelung, um zu gewährleisten, dass die Motoreneinheit in der Transportposition zuverlässig an der Lastaufnahmeeinheit lagegesichert ist. Nach einer vorteilhaften Weiterbildung der Erfindung ist vorgesehen, dass die Verriegelungselemente Spielausgleichsmittel aufweisen.

Bei diesen vorteilhafterweise vorgesehenen Spielausgleichsmitteln handelt es sich um Einrichtungen, die es ermöglichen, ein eventuell in der Verriegelungsposition vorliegendes Spiel zwischen der Motoreneinheit und der Lastaufnahmeeinheit auszugleichen. Ein entsprechender Spielausgleich erhöht die Genauigkeit der Positionierung eines mit der Motoreneinheit verbundenen Kraftfahrzeugmotors und kann zudem in ergänzender Weise zur Lagesicherung der Motoreneinheit an der Lastaufnahmeeinheit genutzt werden. Die Ausgestaltung der Spielausgleichmittel kann dabei in beliebiger Weise erfolgen. Dies kann bspw. durch verstellbare Keilelemente oder dergleichen realisiert werden. Nach einer besonders vorteilhaften Ausgestaltung der Erfindung ist jedoch vorgesehen, dass das Spielausgleichsmittel einen Gewindebolzen aufweist, der sich durch eine Durchgangsöffnung der Verriegelungselemente erstreckt, die einen länglichen Querschnitt aufweist, wobei der Gewindebolzen an der Lastaufnahmeeinheit festgelegt ist. Gemäß dieser Ausgestaltung der Erfindung erstreckt sich durch das Verriegelungselement ein Gewindebolzen. Die Anordnung des Gewindebolzens in der Durchgangsöffnung mit einem länglichen Querschnitt, bspw. nach Art eines Langlochs gewährleistet dabei gleichzeitig die Verlagerbarkeit des Verriegelungselements zwischen der Freigabeposition und der Verriegelungsposition. Über ein auf das freie Ende des Gewindebolzens aufschraubbare Sicherungsmutter ist in einfacher Weise ein ggfs. vorhandener Spiel ausgleichbar. Zudem kann hierdurch in ergänzender Weise eine Lagesicherung erzielt werden, obgleich grundsätzlich bereits die erfindungsgemäße Ausgestaltung eine zuverlässige Lagesicherung gewährleistet.

Die Ausgestaltung der Verriegelungselemente derart, dass diese die Motoreneinheit in der Transportposition zuverlässig verriegeln, kann frei gewählt werden. Nach einer besonders vorteilhaften Ausgestaltung der Erfindung ist jedoch vorgesehen, dass die Verriegelungselemente zwei im Abstand voneinander angeordnete Rastvorsprünge aufweist, die in der Transportposition der Motoreneinheit mit korrespondierend ausgebildeten Rastkörpern an der Motoreneinheit in Eingriff befindlich sind. Gemäß dieser Ausgestaltung der Erfindung hintergreifen - in Abheberichtung der Motoreneinheit von der Lastaufnahmeeinheit betrachtet - die Rastvorsprünge an den Verriegelungselementen an der Motoreneinheit angeordnete Rastkörper. Die Rastkörper können dabei bspw. als umlaufende Flansche ausgebildet sein, welche mit entsprechenden Rastvorsprüngen an den Verriegelungselementen zusammenwirken.

Nach einer besonders vorteilhaften Ausgestaltung der Erfindung ist dabei vorgesehen, dass die Verriegelungselemente eine Einlaufebene aufweisen. Die Anordnung einer Einlaufebene, gewährleistet im Falle der Anordnung der Motoreneinheit an der Aufnahme, d. h. bei Aufsetzen der Motoreneinheit auf die Aufnahmeeinheit, dass die Motoreneinheit bei der Verlagerung in die Transportposition die Verriegelungselemente aus der Verriegelungsposition in die Freigabeposition verschiebt. Nach Erreichen der Transportposition gelangt dann die Motoreneinheit mit der Einlaufebene außer Eingriff und die Verriegelungselemente gelangen selbsttätig, bevorzugt vorgespannt, insbesondere federvorgesepannt, in die Verriegelungsposition und arretieren dort die Motoreneinheit.

Die Ausgestaltung der Verlagerbarkeit der Verriegelungselemente an der Lastaufnahmeeinheit ist dabei grundsätzlich frei wählbar. Nach einer besonders vorteilhaften Ausgestaltung der Erfindung ist vorgesehen, dass die Verriegelungselemente in einer Führung, insbesondere einer Schwalbenschwanzführung an der Lastaufnahme verschiebbar gelagert sind. Die Verwendung einer geeigneten Führung, insbesondere Schwalbenschwanzführung gewährleistet dabei zudem eine zuverlässige Übertragung in Längsachsenrichtung des Aufnahmekörpers gerichteter Kräfte. Diese werden zuverlässig über das Verriegelungselement und die Schwalbenschwanzführung auf die Lastaufnahmeeinheit übertragen.

Ein Ausführungsbeispiel der Erfindung wird nachstehend mit Bezug auf die Zeichnungen erläutert. In den Zeichnungen zeigen:
- Fig. 1: in einer perspektivischen Ansicht ein Ausführungsbeispiel einer Lastaufnahmeeinheit eines Transportsystems;
- Fig. 2: in einer perspektivischen Ansicht die Lastaufnahmeeinheit von Fig. 2 mit daran angeordneter Motoreneinheit in einer Transportposition;
- Fig.3: eine Vorderansicht auf das Transportsystem von Fig. 1 in der in Fig. 1 dargestellten Transportposition und
- Fig. 4: eine Ansicht eines Schnitts des Transportsystems von Fig. 1 in der in Fig. 1 dargestellten Transportposition.

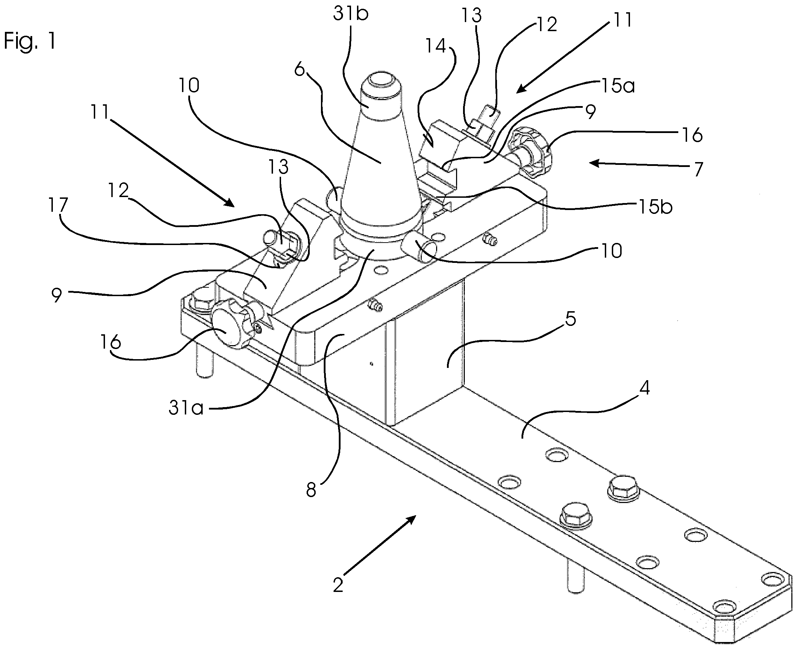

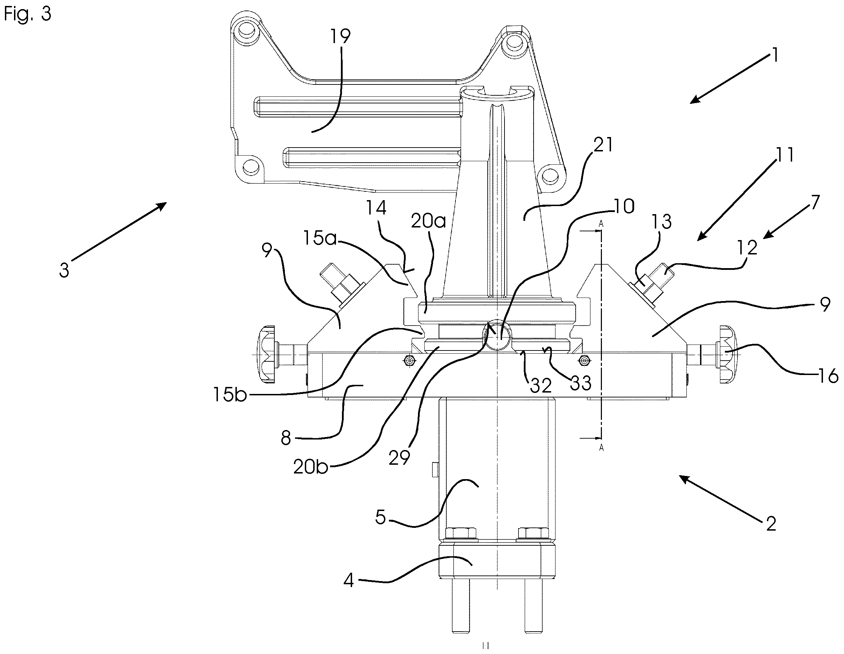

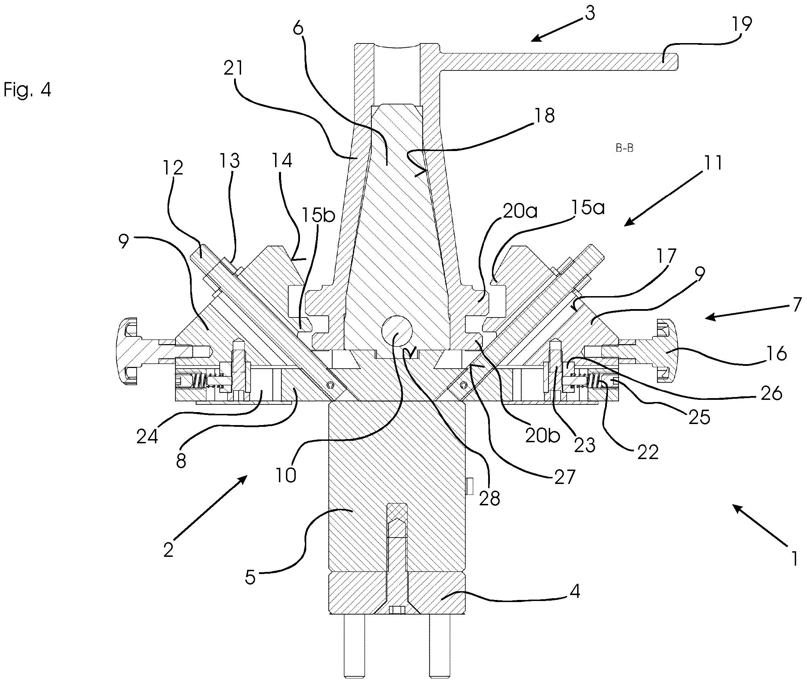

Ein in den Figuren 1 bis 4 dargestelltes Transportsystem 1 zur Aufnahme von hier nicht dargestellten Kraftfahrzeugmotoren weist eine Lastaufnahmeeinheit 2, die an einem hier nicht dargestellten Lastenträger anordbar ist, sowie eine an dem zu transportierenden Kraftfahrzeugmotor anordbare Motoreneinheit 3 auf.

Die in Figur 1 ohne Motoreinheit 3 dargestellte Lastaufnahmeeinheit 2 weist dabei einen Grundträger 4 auf, der mittels geeigneter Schrauben 30, die sich durch Öffnungen in dem Grundträger 4 erstrecken, an einem hier nicht dargestellten Lastenträger, bspw. einem verfahrbaren Montagebock, befestigt werden kann. Der Montagebock bietet dabei üblicherweise die Möglichkeit, die Lastaufnahmeeinheit 2 in ihrer Position zu verstellen, d. h. sowohl anzuheben und abzusenken als auch um eine parallel zur Längsachse des Grundträgers 4 verlaufende Schwenkachse zu verdrehen, so dass ein an dem Transportsystem 1 angeordneter Motor optimal ausgerichtet werden kann. An dem Grundträger 4 ist dabei über einen Distanzblock 5 eine Basisplatte 8 befestigt, welche zur Aufnahme eines Aufnahmekörpers 6 sowie zweier Verriegelungselemente 9 dient, mittels derer die Motoreinheit 3 lagesicher an der Lastaufnahmeeinheit 2 festgelegt werden kann.

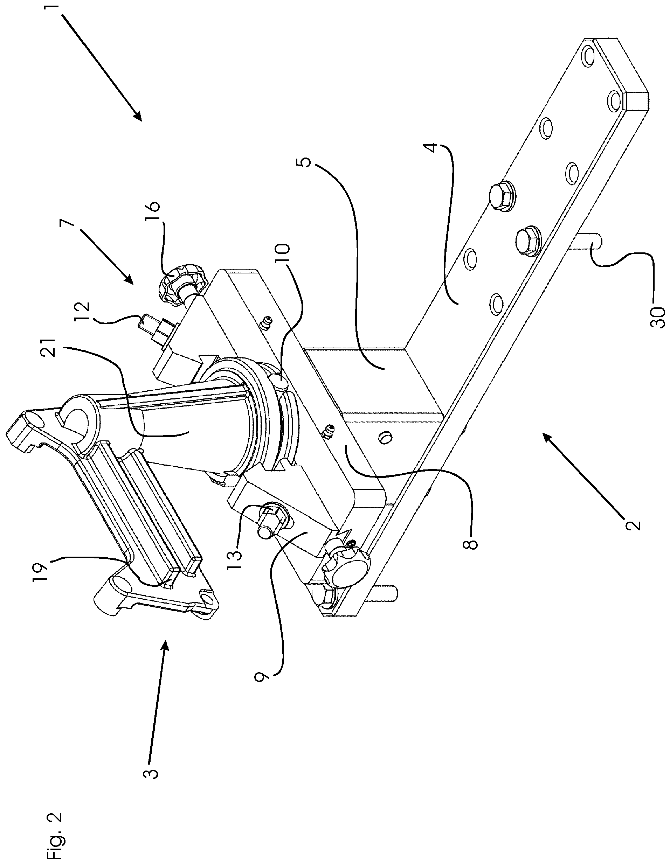

Der Aufnahmekörper 6 weist hierzu zwei in Längsachsenrichtung des Aufnahmekörpers 6 im Abstand voneinander angeordnete Zylinderabschnitte 31a, 31b auf, wobei der Zylinderabschnitt 31b einen kleineren Querschnitt aufweist als der Zylinderabschnitt 31a, so dass diese über einen konischen Verbindungsabschnitt miteinander verbunden sind. An gegenüberliegenden Abschnitten des Zylinderabschnitts 31a ist jeweils ein Bolzen 10 angeordnet, die zur Verdrehsicherung dienen. In der in den Figuren 2 bis 4 dargestellten Transportposition des Motorenträgers 3 ist ein korrespondierend zu dem Aufnahmekörper 6 ausgebildeter Aufnahmeabschnitt 21 der Motoreneinheit 3 mit einer Aufnahmeöffnung 18 derart auf dem Aufnahmekörper 6 angeordnet, dass die Motoreneinheit 3 mit einer unteren Anschlagfläche 32 auf einer Auflageebene 33 der Grundplatte 8 aufliegt. Die Zylinderabschnitte 31a und 31b sind in der Transportposition in entsprechenden Abschnitten in der Aufnahmeöffnung 18 der Motoreneinheit 3 angeordnet und gewährleisten so eine Lagesicherung der Motoreneinheit 3 senkrecht zur Längsachse des Aufnahmekörpers 6. Die Distanzbolzen 10 sind in der Transportposition in entsprechend ausgebildeten Aussparungen 29 an dem Aufnahmeabschnitt 21 angeordnet und bilden somit eine Verdrehsicherung der Motoreneinheit 3 gegenüber der Lastaufnahmeeinheit 2. Bei der Transportposition handelt es sich dabei um die Position des Transportsystems 1, an der die Motoreinheit 3 an der Lastaufnahmeeinheit 2 festgelegt ist, so dass der Motor in der gewünschten Weise verlagert werden kann.

Zur Lagesicherung der Motoreneinheit 3 an der Lastaufnahmeeinheit 2 in der Transportposition weist die Lastaufnahmeeinheit 2 dabei eine an der Basisplatte 8 angeordnete Verriegelungseinheit 7 auf. Die Verriegelungseinheit 7 weist zwei in Schwalbenschwanzführungen an der Basisplatte 8 verschiebbar gelagerte Verriegelungselemente 9 auf. Die Verriegelungselemente 9 sind dabei aus der in den Figuren 2 bis 4 dargestellten Freigabeposition in Richtung auf eine Verriegelungsposition vorgespannt, wobei in der Verriegelungsposition Rastvorsprünge 15a, 15b mit an den Verriegelungselementen 9 korrespondierend ausgebildeten Rastkörper 20a, 20b an dem Aufnahmeabschnitt 21 der Motoreinheit 3 in Eingriff befindlich sind, so dass die Motoreneinheit 3 in Längsachsenrichtung des Aufnahmekörpers 6 gegen Abheben von der Lastaufnahme 2 gesichert ist. Eine in Längsachsenrichtung wirkende Kraft wird auch zuverlässig über die Schwalbenschwanzführung von der Motoreneinheit 3 auf die Lastaufnahmeeinheit 2 übertragen.

Die Federvorspannung der in Richtung aufeinander zu und voneinander weg bewegbaren Verriegelungselemente 9 wird dabei jeweils über ein Federelement 22 hervorgerufen, welches einenends an einer in die Basisplatte 8 einschraubbaren Innensechskantschraube 25 und anderenends an einem Kontaktbolzen 23 anliegt, welcher sich durch eine Nut 26 an der Basisplatte 8 erstreckt und in dem Verriegelungselement 9 befestigt ist. Eine Verlagerung des Verriegelungselements 9 führt somit zu einer Verstellung des Kontaktbolzens 23 in einer Öffnung 24 an der Basisplatte 8, wobei das Federelement 22 eine Vorspannung der Verriegelungselemente 9 in Richtung auf die Verriegelungsposition bewirkt.

Zum Spielausgleich in der Verriegelungsposition weist die Lastaufnahmeeinheit 2 ferner an jedem Verriegelungselement 9 jeweils einen sich durch eine Durchgangsöffnung 17 der Verriegelungselemente 9 erstreckenden Gewindebolzen 12 auf, die in eine Gewindebohrung 27 an der Basisplatte 8 eingeschraubt sind. Die Durchgangsöffnung 17 weist im Querschnitt eine längengestreckte Form nach Art eines Langlochs auf, so dass gewährleistet ist, dass das Verriegelungselement 9 zwischen der Freigabeposition und der Verriegelungsposition verstellt werden kann. Über eine auf den Gewindebolzen 12 aufschraubbare Sicherungsmutter 13 kann dabei das Verriegelungselement 9 zum Spielausgleich in der Verriegelungsposition zusätzlich zur durch die Federkraft aufgebrachten Vorspannung arretiert werden.

Der Aufnahmekörper 6 ist an der Basisplatte 8 über einen entsprechenden Zapfen in einer Vertiefung 28 angeordnet. Eine Befestigung der Motoreneinheit 3 an einem hier nicht dargestellten Kraftfahrzeugmotor erfolgt über einen entsprechend ausgebildeten Anschlussflansch 19. Zur Verstellung der Verriegelungselemente weisen diese Griffe 16 auf, die in die Verriegelungselemente 9 eingeschraubt sind.

**Bezugszeichenliste**

| | | | |
|---|---|---|---|
| 1 | Transportsystem | 31a, 31b | Zylinderabschnitt |
| 2 | Lastaufnahmeeinheit | 32 | Anschlagfläche |
| 3 | Motoreinheit | 33 | Auflageebene |
| 4 | Grundträger | | |
| 5 | Distanzblock | | |
| 6 | Aufnahmekörper | | |
| 7 | Verriegelungseinheit | | |
| 8 | Basisplatte | | |
| 9 | Verriegelungselemente | | |
| 10 | Verdrehsicherung (Bolzen) | | |
| 11 | Sicherungsmittel | | |
| 12 | Gewindebolzen | | |
| 13 | Sicherungsmutter | | |
| 14 | Einlaufebene | | |
| 15a, 15b | Rastvorsprünge | | |
| 16 | Griff | | |
| 17 | Durchgangsöffnung | | |
| 18 | Aufnahmeöffnung | | |
| 19 | Anschlussflansch | | |
| 20a, 20b | Rastkörper | | |
| 21 | Aufnahmeabschnitt | | |
| 22 | Federelement | | |
| 23 | Kontaktbolzen | | |
| 24 | Öffnung | | |
| 25 | Innensechskantschraube | | |
| 26 | Nut | | |
| 27 | Gewindebohrung | | |
| 28 | Vertiefung | | |
| 29 | Aussparung | | |
| 30 | Schrauben | | |

## Patentansprüche

1. Transportsystem (1) für Kraftfahrzeugmotoren, mit
- einer an einem Kraftfahrzeugmotor anordbaren Motoreneinheit (3) und
- einer an einem Lastenträger anordbaren Lastaufnahmeeinheit (2),
**dadurch gekennzeichnet, dass**
an der Lastaufnahmeeinheit (2) eine zwischen einer Verriegelungsposition und einer Freigabeposition verstellbare Verriegelungseinheit (7) angeordnet ist, die derart ausgebildet ist, dass sie die Motoreneinheit (3) in einer Transportposition an der Lastaufnahmeeinheit (2) selbsttätig verriegelt.

2. Transportsystem nach Anspruch 1, **dadurch gekennzeichnet, dass** die Lastaufnahmeeinheit (2) einen Aufnahmekörper (6) und die Motoreneinheit (3) eine derart an den Aufnahmekörper (6) angepasste Aufnahmeöffnung (18) aufweist, dass die Motoreneinheit (3) in der Transportposition im Wesentlichen senkrecht zur Längsachse des Aufnahmekörpers (6) an der Lastaufnahmeeinheit (2) festgelegt ist.

3. Transportsystem nach Anspruch 2, **dadurch gekennzeichnet, dass** die Aufnahmeöffnung (18) und der Aufnahmekörper (6) zwei in Längsachsenrichtung des Aufnahmekörpers (6) im Abstand voneinander angeordnete, korrespondierend ausgebildete Zylinderabschnitte (31a, 31b) aufweist.

4. Transportsystem nach einem oder mehreren der vorhergehenden Ansprüche, **dadurch gekennzeichnet, dass** die Lastaufnahmeeinheit (2) und die Motoreneinheit (3) in der Transportposition über eine Verdrehsicherung (10) aneinander festgelegt sind.

5. Transportsystem nach Anspruch 3, **dadurch gekennzeichnet, dass** die Zylinderabschnitte (31a, 31b) über einen konischen Verbindungsabschnitt miteinander verbunden sind, wobei der der Motoreneinheit (3) zugewandte Zylinderabschnitt (31b) einen kleineren Durchmesser aufweist als der der Motoreneinheit (3) abgewandte Zylinderabschnitt (31a).

6. Transportsystem nach einem oder mehreren der vorhergehenden Ansprüche, **dadurch gekennzeichnet, dass** die Verriegelungseinheit (7) ein, vorzugsweise zwei in Richtung auf die Verriegelungsposition vorgespannte, insbesondere federvorgespannte Verriegelungselemente (9) aufweist.

7. Transportsystem nach Anspruch 6, **dadurch gekennzeichnet, dass** die Verriegelungselemente (9) Spielausgleichsmittel (11) aufweisen.

8. Transportsystem nach Anspruch 6, **dadurch gekennzeichnet, dass** die Verriegelungselemente (9) zwei im Abstand voneinander angeordnete Rastvorsprünge (15a, 15b) aufweist, die in der Transportposition der Motoreneinheit (3) mit korrespondierend ausgebildeten Rastkörpern (20a, 20b) an der Motoreneinheit (3) in Eingriff befindlich sind.

9. Transportsystem nach Anspruch 7, **dadurch gekennzeichnet, dass** das Spielausgleichsmittel (11) einen sich durch eine einen länglichen Querschnitt aufweisende Durchgangsöffnung (17) der Verriegelungselemente (9) erstreckende, an der Lastaufnahmeeinheit (2) festgelegten Gewindebolzen (12) aufweist.

10. Transportsystem nach einem oder mehreren der vorhergehenden Ansprüche, **dadurch gekennzeichnet, dass** das Verriegelungselement (9) eine Einlaufebene (14) aufweist.

11. Transportsystem nach einem oder mehreren der vorhergehenden Ansprüche, **dadurch gekennzeichnet, dass** die Verriegelungselemente (9) in einer Führung, insbesondere Schwalbenschwanzführung an der Lastaufnahmeeinheit (2) verschiebbar gelagert sind.

## Claims

1. A transport system (1) for motor vehicle engines, with
- an engine unit (3) arrangeable on a motor vehicle engine and
- a load pickup unit (2) arrangeable on a load carrier,
**characterized in that**
a locking unit (7) adjustable between a locked position and an unlocked position is arranged on the load pickup unit (2), which is designed such that it automatically locks the engine unit (3) in a transport position on the load pickup unit (2).

2. The transport system according to claim 1, **characterized in that** the load pickup unit (2) has a pickup body (6) and the engine unit (3) has a pickup opening (18) adjusted to the pickup body (6) such that the engine unit (3) in the transport position is fixed mainly perpendicular to the longitudinal axis of the pickup body (6) on the load pickup unit (2).

3. The transport system according to claim 2, **characterized in that** the pickup opening (18) and the pickup body (6) have two correspondingly designed cylinder sections (31a, 31b) arranged at a distance from each other in the direction of the longitudinal axis of the pickup body (6).

4. The transport system according to one or more of the preceding claims, **characterized in that** the load pickup unit (2) and the engine unit (3) are fixed against each other in the transport position via an anti-twist device (10).

5. The transport system according to claim 3, **characterized in that** the cylinder sections (31a, 31b) are interconnected via a conical connection section, wherein the cylinder section (31b) facing the engine unit (3) has a smaller diameter than the cylinder section (31a) facing away from the engine unit (3).

6. The transport system according to one or more of the preceding claims, **characterized in that** the locking unit (7) has one, preferably two, locking elements (9) pretensioned, in particular spring-pretensioned, in the direction towards the locked position.

7. The transport system according to claim 6, **characterized in that** the locking elements (9) have play compensation means (11).

8. The transport system according to claim 6, **characterized in that** the locking elements (9) have two detent projections (15a, 15b) arranged at a distance from each other, which are located in engagement with correspondingly designed detent bodies (20a, 20b) on the engine unit (3) in the transport position of the engine unit (3).

9. The transport system according to claim 7, **characterized in that** the play compensation means (11) has a threaded bolt (12) extending through a through hole (17) of the locking elements (9) having an elongated cross-section and fixed on the load pickup unit (2).

10. The transport system according to one or more of the preceding claims, **characterized in that** the locking element (9) has an infeed plane (14).

11. The transport system according to one or more of the preceding claims, **characterized in that** the locking elements (9) are displaceably mounted in a guide, in particular a dovetail guide on the load pickup unit (2).

## Revendications

1. Système de transport (1) pour des moteurs de véhicule automobile, comprenant :
- une unité de moteur (3) apte à être disposée sur un moteur de véhicule automobile, et
- une unité de réception de charge (2) apte à être disposée sur un support de charge,
**caractérisé en ce que**
- une unité de verrouillage (7) réglable entre une position de verrouillage et une position de libération, conçue de manière à verrouiller automatiquement l'unité de moteur (3) dans une position de transport sur l'unité de réception de charge (2), est disposée sur l'unité de réception de charge (2) .

2. Système de transport selon la revendication 1, **caractérisé en ce que** l'unité de réception de charge (2) présente un corps de réception (6) et l'unité de moteur (3) présente une ouverture de réception (18) adaptée de telle façon au corps de réception (6), que dans la position de transport, l'unité de moteur (3) est fixée sur l'unité de réception de charge (2) essentiellement perpendiculairement à l'axe longitudinal du corps de réception (6).

3. Système de transport selon la revendication 2, **caractérisé en ce que** l'ouverture de réception (18) et le corps de réception (6) présentent deux sections cylindriques (31a, 31b) disposées de façon espacée l'une par rapport à l'autre dans la direction de l'axe longitudinal du corps de réception (6) et formées de façon correspondante.

4. Système de transport selon l'une ou plusieurs des revendications précédentes, **caractérisé en ce que** dans la position de transport, l'unité de réception de charge (2) et l'unité de moteur (3) sont fixées l'une à l'autre par le biais d'un dispositif anti-rotation (10).

5. Système de transport selon la revendication 3, **caractérisé en ce que** les sections cylindriques (31a, 31b) sont reliées entre elles par une section de liaison conique, la section cylindrique (31b) tournée vers l'unité de moteur (3) présentant un diamètre inférieur à celui de la section cylindrique (31a) opposée à l'unité de moteur (3).

6. Système de transport selon l'une ou plusieurs des revendications précédentes, **caractérisé en ce que** l'unité de verrouillage (7) présente un et de préférence deux éléments de verrouillage (9) précontraints en direction de la position de verrouillage, en particulier précontraints par ressort.

7. Système de transport selon la revendication 6, **caractérisé en ce que** les éléments de verrouillage (9) présentent des moyens de compensation de jeu (11).

8. Système de transport selon la revendication 6, **caractérisé en ce que** les éléments de verrouillage (9) présentent deux saillies d'encliquetage (15a, 15b) disposées à distance l'une de l'autre, lesquelles sont mises en engagement sur l'unité de moteur (3) avec des corps d'encliquetage (20a, 20b) formés de manière correspondante, dans la position de transport de l'unité de moteur (3).

9. Système de transport selon la revendication 7, **caractérisé en ce que** le moyen de compensation de jeu (11) présente un boulon fileté (12) fixé sur l'unité de réception de charge (2) et s'étendant à travers une ouverture de passage (17) des éléments de verrouillage (9), laquelle présente une section transversale allongée.

10. Système de transport selon l'une ou plusieurs des revendications précédentes, **caractérisé en ce que** l'élément de verrouillage (9) présente un plan d'entrée (14).

11. Système de transport selon l'une ou plusieurs des revendications précédentes, **caractérisé en ce que** les éléments de verrouillage (9) sont montés dans un guidage, en particulier un guidage en queue d'aronde, de façon coulissante sur l'unité de réception de charge (2).
